# EUROPEAN PATENT SPECIFICATION

(11) **EP 3 088 258 B1**
(45) Date of publication and mention of the grant of the patent: **17.10.2018**
(21) Application number: 14875377.5
(22) Date of filing: 19.11.2014
(51) Int. Cl.: B60R 21/18, B60R 21/2334, B60R 21/2338, B60R 22/14, B60R 21/231

(54) **AIR BELT AND AIR BELT DEVICE**
LUFTGÜRTEL UND LUFTGÜRTELVORRICHTUNG
CEINTURE DE SÉCURITÉ GONFLABLE ET DISPOSITIF DE SÉCURITÉ GONFLABLE

(30) Priority: 27.12.2013 JP 2013271191
(43) Date of publication of application: 02.11.2016
(73) Proprietor: Joyson Safety Systems Japan K.K., Shinagawa-ku Tokyo (JP)
(72) Inventor: KAMEYOSHI, Hikaru, Tokyo 106-8488 (JP); OHMAE, Kazuyoshi, Tokyo 106-8488 (JP); ICHIDA, Atsushi, Tokyo 106-8488 (JP)
(74) Representative: Banzer, Hans-Jörg
(86) International application number: PCT/JP2014/080582
(87) International publication number: WO 2015/098369

(56) References cited:
- EP-A1- 2 781 413
- EP-A2- 1 818 223
- EP-A2- 2 020 343
- GB-A- 2 341 358
- JP-A- 2007 216 872
- JP-A- 2009 012 661
- JP-A- 2010 143 422
- JP-A- 2011 105 064
- JP-A- 2011 105 064

## Description

### TECHNICAL FIELD

The disclosure relates to an air belt and an air belt device, and more particularly, to an air belt and an air belt device capable of appropriately improving a restraining capability.

### BACKGROUND ART

In general, a vehicle such as an automobile is provided with a three-point seat belt device configured to restrain a passenger at a seat having a chair part on which the passenger sits and a backrest part positioned at a backside of the passenger. The seat belt device has a webbing configured to restrain the passenger, a seat belt retractor configured to wind the webbing, a guide anchor provided at a vehicle body-side and configured to guide the webbing, a belt anchor configured to fix the webbing to the vehicle body-side, a buckle arranged at a side of the seat and a tongue arranged at the webbing, and is configured to fit the tongue into the buckle, thereby restraining the passenger with the webbing.

In recent years, in order to improve a restraining capability of the seat belt device, an air belt device configured to inflate the webbing configured to restrain the passenger by a gas during an emergency such as a collision, to expand a contact area with a chest region of the passenger, and to absorb an impact generated at the chest region has been put to practical use. For example, as disclosed in Patent literature 1, the air belt device has a belt configured to accommodate therein an inflatable bag and having one end supported to a fixing part, a tongue device provided at the other end of the belt, a buckle device which is supported to the fixing part and to which the tongue device is to be coupled, and an inflator configured to generate a high-pressure gas, and is configured to supply to the bag a high-pressure gas generated by the inflator upon a vehicle collision, thereby inflating the bag. Also, as disclosed in Patent literature 2, a configuration of arranging an inflation part for protecting a side head of the passenger at a part of the air belt has been also suggested.

### CITATION LIST

### PATENT LITERATURE

Patent literature 1: JP-A-2001-213256
Patent literature 2: JP-A-2007-216872

### SUMMARY OF INVENTION

### PROBLEM TO BE SOLVED

According to the air belt device disclosed in Patent literature 1, the webbing is configured to inflate in a substantially equal manner from a vicinity of the tongue to a vicinity of the belt anchor. Therefore, when the air belt is inflated at a state where the passenger normally sits on the seat (the passenger's back is closely contacted to the backrest part), the load increases over a wide range from the chest region to an abdominal region. However, since the chest region or the abdominal region includes diverse internal organs and is protected only by ribs, it is necessary to reduce the load of the corresponding region.

Also in the air belt device of Patent literature 2, the same problem as Patent literature 1 may be caused in terms of the inflation of the webbing. Also, even when the inflation part for protecting the side head is arranged at a shoulder region, since the inflation part is arranged above the shoulder region, it never contributes to the impact absorption of the passenger upon a front collision. Also, a gap is likely to occur between the webbing and the passenger due to the inflation part, so that the restraining capability of the webbing may be lowered.

An airbelt including a bag which is arranged in a webbing according to the preamble of the independent claim 1 is known from the document GB 2,341,358. It is therefore an object of the disclosure to provide an air belt and an air belt device capable of absorbing an impact upon inflation and improving a restraining capability.

### SOLUTION TO PROBLEM

According to the disclosure, there is provided an air belt including a bag which is arranged in a webbing configured to restrain a torso of a passenger and which is supplied with a gas and inflated during an emergency, which is characterized in that, the bag includes a main inflating part which is to be supplied with the gas and which is to be inflated and a gas supply channel which is configured to supply the gas to the main inflating part, and the main inflating part is configured such that a longitudinal direction inflation width at a shoulder region of the passenger is greater than a longitudinal direction inflation width at a chest region of the passenger.
Also, according to the disclosure, there is provided an air belt device including an air belt having a bag which is arranged in a webbing configured to restrain a torso of a passenger and which is supplied with a gas and inflated during an emergency, and an inflator configured to supply the gas into the air belt, which is characterized in that, in the air belt, the bag includes a main inflating part which is to be supplied with the gas and which is to be inflated and a gas supply channel which is configured to supply the gas to the main inflating part, and the main inflating part is configured such that a longitudinal direction inflation width at a shoulder region of the passenger is greater than a longitudinal direction inflation width at a chest region of the passenger.
In the air belt and the air belt device, the main inflating part may be configured so that the longitudinal direction inflation width is greatest at a height position in the vicinity of a clavicle of the passenger within a range contacting the passenger.

Also, a boundary center point between the main inflating part and the gas supply channel may be set at a more upper end-side of the air belt than a central line of a seat on which the passenger sits. Also, the main inflating part is set based on a 50 percentile male, for example.

### ADVANTAGEOUS EFFECTS OF INVENTION

According to the air belt and the air belt device of the disclosure, the longitudinal direction inflation width of the main inflating part of the bag is set to be greater at the shoulder region of the passenger. Therefore, when the air belt is inflated at a state where the passenger normally sits on the seat (the passenger's back is closely contacted to the backrest part), it is possible to bear a pressure to be applied to the passenger at the shoulder region having relatively high strength in the body's skeleton, so that it is possible to absorb an impact to be applied to the passenger.

Also, upon the vehicle collision, the inertia force is applied to move forwards the passenger. The pressure to be applied at the shoulder region positioned at the upper part of the torso of the passenger is set to be greater, so that it is possible to effectively restrain the passenger who intends to rotate forward about a waist region serving as an axis, and to restrain the forward movement, thereby improving the restraining capability.

### BRIEF DESC RIPTION OF DRAWINGS

FIG. 1 is a front view depicting an inflated state of an air belt according to a first illustrative embodiment of the disclosure.
FIG. 2 is a side view of the air belt at the inflated state, in which FIG. 2A depicts the first illustrative embodiment and FIG. 2B depicts the related art.
FIG. 3 is a developed plan view of a base cloth configuring the air belt, in which FIG. 3A depicts the first illustrative embodiment, FIG. 3B depicts a second illustrative embodiment, FIG. 3C depicts a third illustrative embodiment, FIG. 3D depicts a fourth illustrative embodiment, and FIG. 3E depicts a fifth illustrative embodiment.
FIG. 4 depicts configurations of the air belt according to the fourth illustrative embodiment and the fifth illustrative embodiment, in which FIG. 4A is a sectional view taken along a line A-A in the fourth illustrative embodiment and FIG. 4B is a sectional view taken along a line B-B in the fifth illustrative embodiment.
FIG. 5 depicts an overall configuration of a seat belt device having an air belt device according to an illustrative embodiment of the disclosure.
FIG. 6 is a 3D image diagram depicting the inflated state of the air belt, in which FIG. 6A is a front view and FIG. 613 is a side view.

### DESCRIPTION OF EMBODIMENTS

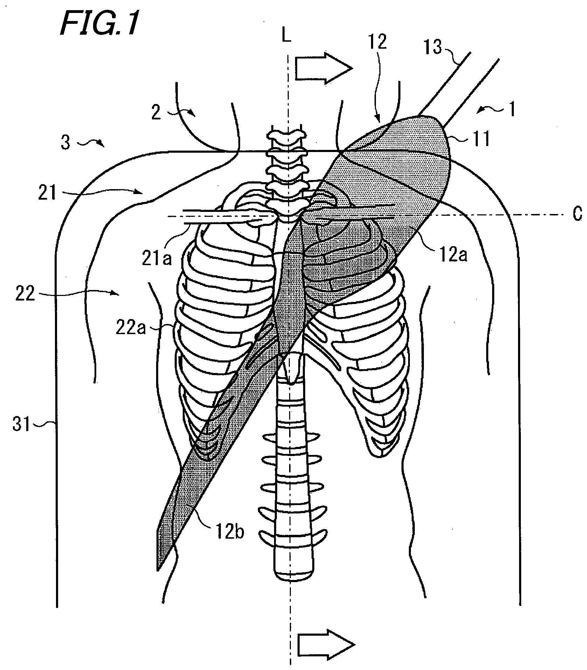

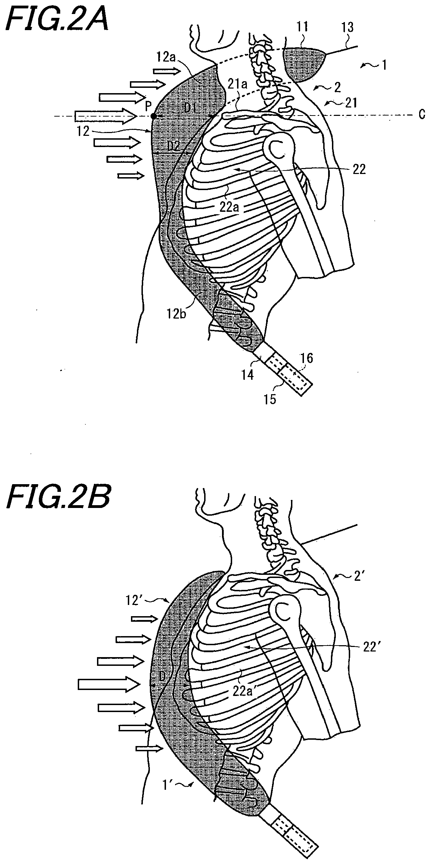

Hereinafter, illustrative embodiments of the disclosure will be described with reference to FIGS. 1 to 6. Herein, FIG. 1 is a front view depicting an inflated state of an air belt according to a first illustrative embodiment of the disclosure. FIG. 2 is a side view of the air belt at the inflated state, in which FIG. 2A depicts the first illustrative embodiment and FIG. 2B depicts the related art. In the respective figures, a passenger is shown in a see-through state for sake of explanations.

As shown in FIGS. 1 and 2A, an air belt 1 according to a first illustrative embodiment of the disclosure includes a bag 12 arranged in a webbing 11 configured to restrain a torso of a passenger 2, the bag 12 being supplied with a gas and inflated during an emergency. The bag 12 has a main inflating part 12a that is to be supplied with the gas and is to be inflated and a gas supply channel 12b configured to supply the gas to the main inflating part 12a. The main inflating part 12a is configured so that a longitudinal direction inflation width D1 at a shoulder region 21 of the passenger 2 is greater than a longitudinal direction inflation width D2 at a chest region 22 of the passenger 2. Upon inflation of the bag 12, the bag is closely contacted to an inner surface of the webbing 11. Therefore, in FIGS. 1 and 2A, the webbing 11 is shown with the bold line.

The passenger 2 is assumed as a 50 percentile male (AM50). In the first illustrative embodiment, the shoulder region 21 means a region that does not include an internal organ adjacent to a shoulder joint, and the chest region 22 means a region in which an internal organ is protected by ribs 22a. In the meantime, for a vehicle in which the passenger 2 is a female or a small person, the air belt 1 may be designed based on a 5 percentile female (AM05).

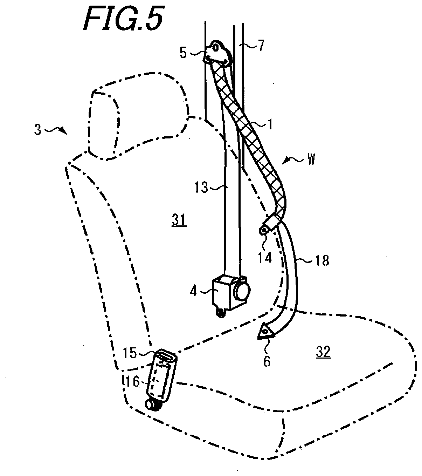

As shown in FIGS. 1 and 2A, the air belt 1 has an upper end connected to a non-inflation webbing 13 and a lower end connected to a tongue 14. The non-inflation webbing 13 is connected to a seat belt retractor configured to wind thereto the webbing 11 and the non-inflation webbing 13, through a guide anchor fixed to a vehicle body-side, for example (refer to FIG. 5).

The tongue 14 is configured to be detachably mounted to a buckle 15 fixed to the vehicle body-side. The buckle 15 is connected with an inflator 16 configured to generate a high-pressure gas. A gas passage is formed so that the gas generated from the inflator 16 with the tongue 14 being connected to the buckle 15 can be supplied to the bag 12. As the gas supply method, any method that has been used in the air belt device of the related art can be used. That is, the disclosure is not limited to the shown configuration.

The bag 12 configured by the main inflating part 12a and the gas supply channel 12b is accommodated in the webbing 11 with being folded in a width direction at a usual state. As the webbing 11 configured to accommodate therein the bag 12, a mesh webbing as disclosed in a JP-B-3945100 or JP-B-4835312 is used. The mesh webbing is a knit configured by a plurality of knitting yarns and is a webbing formed to be extendable.

During an emergency such as a vehicle collision, the inflator 16 is operated to generate the gas, which is supplied to the gas supply channel 12b. The gas supply channel 12b is expanded in the webbing 11, thereby forming a gas flow path. The gas having expanded the gas supply channel 12b is supplied to the main inflating part 12a. The main inflating part 12a is inflated in the webbing 11, so that it is inflated within a region from the chest region 22 to the shoulder region 21 of the passenger 2, as shown in FIG. 1.

Also, as shown in FIG. 2A, the main inflating part 12a is configured so that the longitudinal direction inflation width D1 at the shoulder region 21 of the passenger 2 is greater than the longitudinal direction inflation width D2 at the chest region 22 of the passenger 2. More specifically, the main inflating part 12a is configured so that the longitudinal direction inflation width D1 is greatest at a height position in the vicinity of a clavicle 21a of the passenger 2 within a range contacting the passenger 2. In FIGS. 1 and 2A, a height position equivalent to the clavicle 21a is shown with the dashed-dotted line C.

In the meantime, according to an air belt 1' of the related art, a boundary between the main inflating part and the gas supply channel is unclear, and a bag 12' is configured to inflate in an elongated shape as a whole, in many cases. In this case, a longitudinal direction inflation width D of the bag 12' is substantially equal from a shoulder region 21' to a chest region 22'. In general, the passenger 2 is applied with a pressure in accordance with a forward protrusion amount of the bag 12' having an equal internal pressure. Therefore, according to the air belt 1' of the related art, the load to be applied to the chest region 22' of the passenger 2' is highest.

In contrast, as shown in FIG. 2A, the air belt 1 according to the first illustrative embodiment is configured so that the longitudinal direction inflation width D1 at the shoulder region 21 is greatest. Therefore, the forward protrusion amount is also configured to be great at the shoulder region 21. Thus, as shown with white arrows in FIG. 2A, it is possible to reduce the load at the chest region 22 and to concentrate the load on the shoulder region 21. The shoulder region 21 does not include an internal organ, has a stronger skeleton than the ribs 22a and can bear the high load, so that it can absorb an impact to be applied to the passenger 2.

Upon the vehicle collision, the passenger 2 moves forwards due to an inertia force. Regarding this, it is possible to improve the restraint at the shoulder region 21 of the passenger 2 by increasing a pressure of the shoulder region 21 of the passenger 2. Therefore, it is possible to effectively restrain an upper half body of the passenger 2 rotating about a waist region serving as an axis and to suppress the forward movement of the upper half body, thereby improving the restraining capability.

Also, as shown in FIG. 1, a boundary center point Q between the main inflating part 12a and the gas supply channel 12b is set at a more upper side (a white arrow direction-side in FIG. 1) of the air belt 1 than a central line L of the seat 3 on which the passenger 2 sits. The boundary center point Q is set in this way, so that it is possible to easily set the longitudinal direction inflation width D1 at the shoulder region 21 to be greater than the longitudinal direction inflation width D2 at the chest region 22.

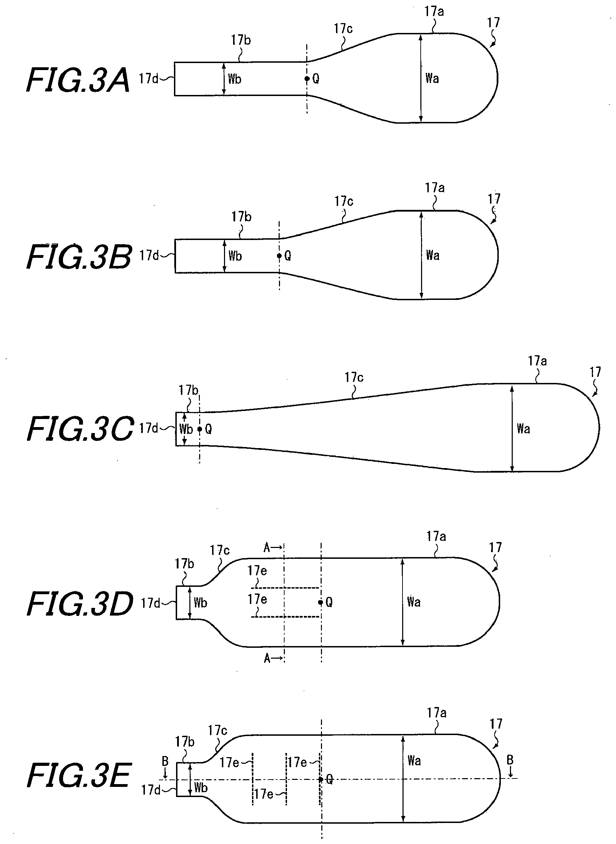

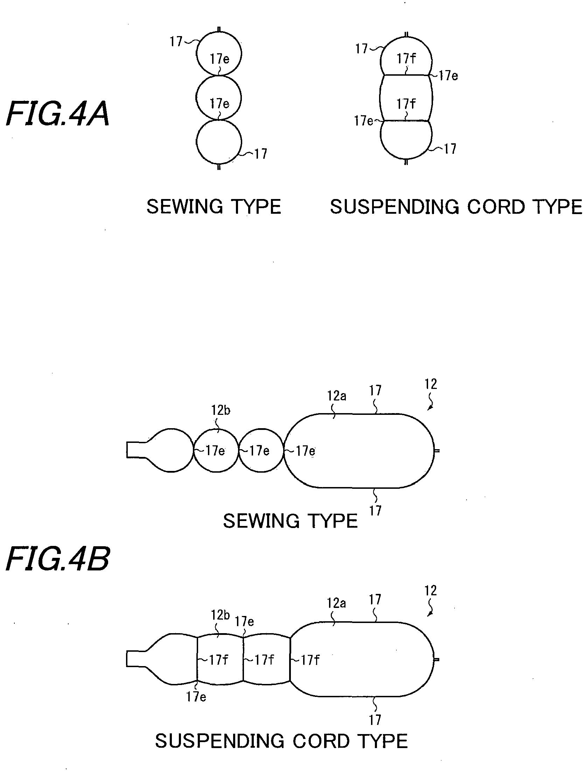

In the below, the base cloth configuring the bag 12 is described with reference to FIGS. 3 and 4. Herein, FIG. 3 is a developed plan view of a base cloth configuring the air belt, in which FIG. 3A depicts the first illustrative embodiment, FIG. 3B depicts a second illustrative embodiment, FIG. 3C depicts a third illustrative embodiment, FIG. 3D depicts a fourth illustrative embodiment, and FIG. 3E depicts a fifth illustrative embodiment. FIG. 4 depicts configurations of the air belt according to the fourth illustrative embodiment and the fifth illustrative embodiment, in which FIG. 4A is a sectional view taken along a line A-A in the fourth illustrative embodiment and FIG. 4B is a sectional view taken along a line B-B in the fifth illustrative embodiment.

The bag 12 is formed to have a pouch shape by overlapping a base cloth for forming a surface and a base cloth for forming a backside and sewing outer peripheries thereof. FIGS. 3A to 3E depict the base cloth 17 for forming the surface or the backside, respectively. In each figure, a boundary line between the main inflating part 12a and the gas supply channel 12b is formed at a position shown with the dashed-dotted line, and the boundary center point Q is positioned at a central portion of the boundary line.

The first illustrative embodiment shown in FIG. 3A depicts the base cloth 17 configuring the bag 12 shown in FIGS. 1 and 2A. That is, the base cloth 17 shown in FIG. 3A is suitable for the standard air belt 1 using the disclosure. The base cloth 17 has a wide width part 17a configured to form the main inflating part 12a and having a lateral width Wa, a narrow width part 17b configured to form the gas supply channel 12b and having a lateral width Wb, and a tapered part 17c configured to couple the wide width part 17a and the narrow width part 17b. In the first illustrative embodiment, the tapered part 17c configures a portion of the main inflating part 12a, and the boundary center point Q between the main inflating part 12a and the gas supply channel 12b is arranged on a boundary line between the tapered part 17c and the narrow width part 17b. In the meantime, an end portion 17d of the narrow width part 17b configures a connection portion of the inflator 16.

Herein, the lateral width Wa of the wide width part 17a is set based on the general adult male (for example, AM50) and is also set so that the longitudinal direction inflation width D1 at the shoulder region 21 is greater than the longitudinal direction inflation width D2 at the chest region 22, as shown in FIGS. 1 and 2A. Also, the lateral width Wb of the narrow width part 17b is set so that it is not narrower than a lateral width of a usual seat belt (a webbing) when the gas supply channel 12b is inflated into a substantially cylindrical shape. In the meantime, the shape of the base cloth 17 is actually designed using an AM50 dummy.

In the second illustrative embodiment of FIG. 3B, the tapered part 17c is extended towards the gas supply channel 12b-side. That is, the boundary center point Q between the main inflating part 12a and the gas supply channel 12b is moved to the gas supply channel 12b-side, as shown. Therefore, the bag 12 of the second illustrative embodiment has the longer main inflating part 12a than the first illustrative embodiment and the shorter gas supply channel 12b than the first illustrative embodiment.

According to the above configuration, the main inflating part 12a is extended towards the gas supply channel 12b-side, so that the longitudinal direction inflation width D1 can be increased at the shoulder region 21 for a passenger having a smaller physique than the general adult male (for example, AM50), too and the restraining capability can be thus improved.

In the third illustrative embodiment of FIG. 3C, the tapered part 17c is extended towards both the main inflating part 12a-side and the gas supply channel 12b-side and an entire length of the bag 12 is formed to be longer. In the third illustrative embodiment, a boundary between the main inflating part 12a and the gas supply channel 12b is not clear. However, when the boundary coincides with the boundary between the narrow width part 17b and the tapered part 17c, the boundary center point Q between the main inflating part 12a and the gas supply channel 12b is arranged at a shown position.

According to the above configuration, the entire length of the bag 12 is lengthened, so that the longitudinal direction inflation width D1 can be increased at the shoulder region 21 for a passenger having a larger physique than the general adult male (for example, AM50), too and the restraining capability can be thus improved. Also, the main inflating part 12a is extended towards the gas supply channel 12b-side, so that the longitudinal direction inflation width D1 can be increased at the shoulder region 21 for a passenger having a smaller physique than the general adult male (for example, AM50), too and the restraining capability can be thus improved.

In the fourth illustrative embodiment of FIG. 3D, the substantially entire length of the bag 12 except for the vicinity of the end portion 17d configuring the connection portion of the inflator 16 is formed into the wide width part 17a, and the gas supply channel 12b is formed by seam portions 17e. According to this configuration, it is possible to easily manufacture the bag 12 in conformity to a variety of utilities (for a general adult, for a passenger having a large physique, for a passenger having a small physique, and the like) by changing conditions (lengths, the number, positions and the like) of the seam portions 17e without changing the shape of the base cloth 17. Also, according to this illustrative embodiment, it is possible to sufficiently widen the lateral width of the gas supply channel 12b, so that it is possible to reduce the stress concentration on a contact surface with the passenger.

The seam portion 17e may be a sewing type where a pair of surface and backside base clothes 17 is together sewn, as shown in FIG. 4A, or may be a suspending cord type where a pair of surface and backside base clothes 17 is connected by tethers 17f. Also, the number of the seam portions 17e is not limited to two, as shown, and may be one or three or more.

In the fifth illustrative embodiment of FIG. 3E, the directions of the seam portions 17e of the fourth illustrative embodiment are changed. That is, while the seam portions 17e in the fourth illustrative embodiment of FIG. 3D are formed in a longitudinal direction of the bag 12, the seam portions 17e in the fifth illustrative embodiment of FIG. 3E are formed in a lateral width direction of the bag 12. Also with this configuration, the same effects as the fourth illustrative embodiment are accomplished.

The seam portion 17e may be a sewing type where a pair of surface and backside base clothes 17 is together sewn, as shown in FIG. 4B, or may be a suspending cord type where a pair of surface and backside base clothes 17 is connected by tethers 17f. Also, the number of the seam portions 17e is not limited to three, as shown, and may be two or less or four or more.

In the below, an air belt device having the air belt 1 is described with reference to FIG. 5. FIG. 5 depicts an overall configuration of a seat belt device having an air belt device according to an illustrative embodiment of the disclosure. The same constitutional components as the air belt 1 are denoted with the same reference numerals, and the overlapping descriptions thereof are omitted.

The air belt 1 of the illustrative embodiment is used for a webbing of the seat belt device, for example. The shown seat belt device has a webbing W configured to restrain a passenger, a seat belt retractor 4 configured to wind the webbing W, a guide anchor 5 provided at a vehicle body-side and configured to guide the webbing W, a belt anchor 6 configured to fix the webbing W to the vehicle body-side, a buckle 15 arranged at a side of the seat 3 and a tongue 14 arranged at the webbing W.

The shown seat belt device is a seat belt device for a so-called seat next to the driver, and the seat 3 mounted on a vehicle generally has a backrest part 31 positioned at a backside of the passenger and a chair part 32 on which the passenger sits. The seat belt retractor 4 is arranged in a pillar 7 arranged at a side part of the vehicle, and the guide anchor 5 is arranged on a surface of the pillar 7, for example. The belt anchor 6 is fixed to a door-side vehicle or a bottom of the chair part 32. The buckle 15 is arranged at a side surface part of the chair part 32 facing a center of the vehicle.

Also, the inflator 16 is arranged in the buckle 15. The inflator 16 and the bag 12 are connected so that when the tongue 14 is connected to the buckle 15, the gas can be supplied from the inflator 16 into the bag 12. In the meantime, in order to supply the gas to the air belt 1, any method that has been conventionally used can be used.

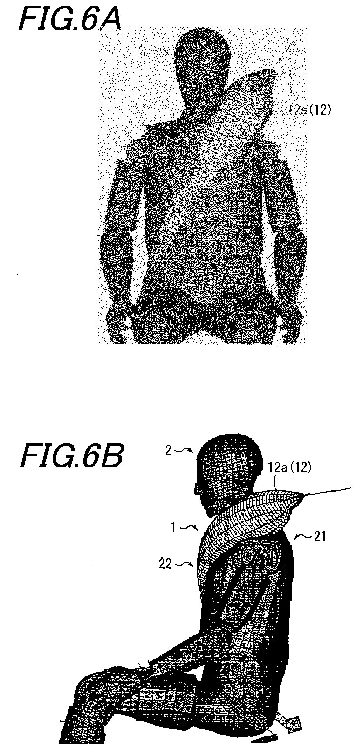

The webbing W is configured by the air belt 1 having the bag 12 embedded therein, a non-inflation webbing 13 connected to an upper end of the air belt 1, and a non-inflation webbing 18 connected to the tongue 14. The air belt 1 according to any of the first to fifth illustrative embodiments is appropriately used. The air belt device of this illustrative embodiment has at least the air belt 1 and the inflator 16. In the meantime, as the non-inflation webbing 18 configured to restrain a waist region of the passenger, an air belt configured to be inflated during an emergency such as vehicle collision may be used.
A simulation was performed for the seat belt device having the air belt 1, so that a 3D image diagram was prepared. FIG. 6 is a 3D image diagram depicting the inflated state of the air belt, in which FIG. 6A is a front view and FIG. 6B is a side view. In FIG. 6, the seat 3 is omitted for sake of explanations.
As shown in FIG. 6, according to the air belt device of the illustrative embodiment, the main inflating part 12a is configured so that the longitudinal direction inflation width D1 at the shoulder region 21 of the passenger 2 is greater than the longitudinal direction inflation width D2 at the chest region 22 of the passenger 2. Thereby, when the air belt 1 is inflated at a state where the passenger normally sits on the seat 3 (the passenger's back is closely contacted to the backrest part 31), it is possible to bear a pressure to be applied to the passenger at the shoulder region 21 having relatively high strength in the body's skeleton, so that it is possible to absorb an impact to be applied to the passenger 2.
Also, upon the vehicle collision, the inertia force is applied to move forwards the passenger 2. The pressure to be applied at the shoulder region positioned at the upper part of the torso of the passenger is set to be greater, so that it is possible to effectively restrain the passenger who intends to rotate forward about the waist region serving as an axis, and to restrain the forward movement, thereby improving the restraining capability.
The disclosure is not limited to the above illustrative embodiments. For example, the disclosure can also be applied to a seat belt device for another seat, such as a seat belt device for a driver seat and a seat belt device for a rear seat.

### REFERENCE SIGNS LIST

1: air belt
2: passenger
3: seat
4: seat belt retractor
5: guide anchor
6: belt anchor
7: pillar
11: webbing
12: bag
12a: main inflating part
12b: gas supply channel
13, 18: non-inflation webbing
14: tongue
15: buckle
16: inflator
17: base cloth
17a: wide width part
17b: narrow width part
17c: tapered part
17d: end portion
17e: seam portion
17f: tether
21: shoulder region
21a: clavicle
22: chest region
22a: rib
31: backrest part
32: chair part

## Claims

1. An air belt (1) including a bag (12) which is arranged in a webbing (11) configured to restrain a torso of a passenger (2) and which is supplied with a gas and inflated during an emergency,
wherein the bag (12) includes a main inflating part (12a) which is to be supplied with the gas and which is to be inflated and a gas supply channel (12b) which is configured to supply the gas to the main inflating part (12a), and
wherein the main inflating part (12a) is configured such that a longitudinal direction inflation width (D1) at a shoulder region (21) of the passenger (2) is greater than a longitudinal direction inflation width (D2) at a chest region (22) of the passenger (2),
**characterized in that** a boundary center point (Q) between the main inflating part (12a) and the gas supply channel (12b) is closer to an upper end of the air belt (1) than a central line (L) of a seat (3) on which the passenger (2) sits.

2. The air belt (1) according to claim 1, **characterized in that** the main inflating part (12a) is configured so that the longitudinal direction inflation width (D1) is greatest at a height position in the vicinity of a clavicle (21a) of the passenger (2) within a range contacting the passenger (2).

3. The air belt (1) according to one of claims 1 or 2, **characterized in that** the main inflating part (12a) is set based on a general adult male, which general adult male is a 50 percentile male.

4. An air belt (1) device comprising
an air belt (1) including
a bag (12) which is arranged in a webbing (11) configured to restrain a torso of a passenger (2) and which is supplied with a gas and inflated during an emergency,
and
an inflator (16) configured to supply the gas into the air belt (1),
**characterized in that**
the air belt (1) is the air belt (1) according to any one of claims 1 to 3.

## Patentansprüche

1. Ein Luftgurt (1) mit einem Sack (12), welcher in einem Gewebe (11) angeordnet und dazu eingerichtet ist, einen Torso eines Passagiers (2) zurückzuhalten, und welcher in einem Notfall mit einem Gas versorgt und aufgeblasen wird,
wobei der Sack (12) ein Hauptaufblasteil (12a), welches mit dem Gas zu versorgen ist und welches aufzublasen ist, und einen Gasversorgungskanal (12b), welcher dazu eingerichtet ist, das Hauptaufblasteil (12a) mit dem Gas zu versorgen, aufweist, und
wobei das Hauptaufblasteil (12a) so eingerichtet ist, dass eine Aufblasweite (D1) in Längsrichtung in einem Schulterbereich (21) des Passagiers (2) größer ist als eine Aufblasweite (D2) in Längsrichtung in einem Brustbereich (21) des Passagiers (2),
**dadurch gekennzeichnet, dass** ein Grenzmittelpunkt (Q) zwischen dem Hauptaufblasteil (12a) und dem Gasversorgungskanal (12b) einem oberen Ende des Luftgurts (1) näher ist als eine Mittellinie (L) eines Sitzes (3), auf welchem der Passagier (2) sitzt.

2. Der Luftgurt (1) gemäß Anspruch 1, **dadurch gekennzeichnet, dass** das Hauptaufblasteil (12a) so eingerichtet ist, dass die Aufblasweite (D1) in Längsrichtung in einer Höhenposition in der Umgebung eines Schlüsselbeins (21a) des Passagiers (2) innerhalb eines Bereichs, welcher den Passagier (2) berührt, am größten ist.

3. Der Luftgurt (1) gemäß Anspruch 1 oder 2, **dadurch gekennzeichnet, dass** das Hauptaufblasteil (12a) auf Grundlage eines allgemeinen männlichen Erwachsenen festgelegt ist, wobei der allgemeine männliche Erwachsene ein Median-Mann ist.

4. Eine Luftgurt-Vorrichtung, umfassend
einen Luftgurt (1) mit
einem Sack (12), welcher in einem Gewebe (11) angeordnet und dazu eingerichtet ist, einen Torso eines Passagiers (2) zurückzuhalten, und welcher in einem Notfall mit einem Gas versorgt und aufgeblasen wird, und
einer Aufblaseinheit (16), welche dazu eingerichtet ist, den Luftgurt (1) mit dem Gas zu versorgen,
**dadurch gekennzeichnet, dass**
der Luftgurt (1) der Luftgurt (1) gemäß einem der Ansprüche 1 bis 3 ist.

## Revendications

1. Une ceinture gonflable (1) comprenant un sac (12) qui est aménagé dans une sangle (11) configurée pour retenir un torse de passager (2) et qui est alimentée en gaz et gonflée en cas d'urgence,
- dans laquelle le sac (12) comprend une partie de gonflage principale (12a) qui doit être alimentée en gaz et qui est destinée à être gonflée et comprend un canal (12b) d'alimentation en gaz qui est configuré pour fournir le gaz à la partie de gonflage principale, et
- dans laquelle la partie de gonflage principale (12a) est configurée de sorte qu'une largeur de gonflage selon une direction longitudinale (D1) dans une région de l'épaule (21) du passager (2) soit supérieure à une largeur de gonflage selon une direction longitudinale (D2) dans une région de poitrine (22) du passager (2), **caractérisée en ce qu'**un point central limite (Q) entre la partie de gonflage principale (12a) et le canal d'alimentation en gaz (12b) est plus proche de l'extrémité supérieure de la ceinture gonflable (1) que ne l'est une ligne centrale (L) d'un siège (3) sur lequel le passager (2) est assis.

2. La ceinture gonflable selon la revendication 1, **caractérisée en ce que** la partie de gonflage principale (12a) est configurée de sorte que la largeur de gonflage selon la direction longitudinale (D1) est la plus grande dans une position élevée à proximité de la clavicule (21a) du passager (2) dans la zone au contact du passager (2).

3. La ceinture gonflable selon la revendication 1 ou 2, **caractérisée en ce que** la partie de gonflage principale (12a) est établie en général pour un mâle adulte, lequel mâle adulte en général est un mâle à 50 percentile.

4. Un dispositif de ceinture gonflable comprenant
- une ceinture gonflable (1) incluant un sac (12) qui est disposé dans une sangle (11) configurée pour retenir un torse de passager (2) et qui est alimentée en gaz et gonflée en cas d'urgence,
et
- un gonfleur (16) configuré pour amener le gaz dans la ceinture gonflable (1),
**caractérisé en ce que** la ceinture gonflable (1) est la ceinture gonflable selon l'une quelconque des revendications 1 à 3.
